# EUROPEAN PATENT APPLICATION

(11) **EP 3 128 617 A1**
(43) Date of publication of application: **08.02.2017**
(21) Application number: 15306262.5
(22) Date of filing: 04.08.2015
(51) Int. Cl.: H01R 4/64, H01R 11/26, H01R 13/74, F16B 37/06

(54) **DEVICE FOR FIXING AN ELECTRICAL CONNECTION TERMINAL TO A SUPPORT**

(71) Applicant: Dubuis et Cie, 41000 Villebarrou (FR)
(72) Inventor: Cumant, Mickael, 41000 Villebarou (FR)
(74) Representative: Knight, Robert

(57) **Abstract**

A device for fixing an electrical connection terminal to a support provided with an opening, the device comprising: a generally tubular bush for location within the opening of the support and provided with opposed front and rear ends between which extends a bore; a dowel configured for forced insertion into the bore so as to cause outward deformation of the bush, the dowel being provided with connection means engageable with a connector for fastening the terminal to the support and to facilitate the forced insertion; wherein there is further provided a weak region interconnecting the bush and the dowel.

## Description

### Technical Field

The invention relates to a device for fixing an electrical connection terminal to a support.

### Background

Electrical equipment used in many different industries must be earthed, including for example, communications equipment on aircraft or signaling equipment on railways. This typically requires each item of equipment to be electrically connected by means of metal braids or earthing wires to a substrate such as the frame of the aircraft or a rail of railway. The ends of the metal braids or wires are received in terminals which are fixed to the substrate.

Fixing a terminal to a support may typically be carried out by means of a screw and a nut, the terminal being held tightly between the head of the screw and a surface of the substrate. In order to ensure good electrical contact between the terminal and the substrate, the surface of the substrate must be stripped of paint or other coating before the assembly of the screw and the nut. Once the assembly has been carried out, the stripped region of the support must be protected against corrosion. For the assembly of the screw and the nut, access is required to the two sides of the substrate during assembly.

EP 1 376 766 in the name of the applicant discloses a device for fixing an electrical connection terminal to a substrate comprising, for example, a railway rail. The device comprises a ring which is to be introduced into a cylindrical hole formed in the substrate, a socket for insertion into the ring and a screw for engagement with a threaded opening provided in the socket. When assembling the device, the ring is firstly positioned in the cylindrical hole in the substrate, and then a tensile force is exerted on the socket using a tool so as to introduce the socket into the ring with force, thereby causing radial expansion of the ring and locking of the ring in the hole. The screw is then screwed into the threaded opening in the socket, the terminal being held tightly between the head of the screw and the ring, thus making it possible to fix the terminal to the substrate and to establish electrical contact between the terminal and the substrate.

An advantage of this fixing device is that it does not necessarily require the surface of the substrate to be stripped beforehand in order to ensure good electrical contact between the terminal and the substrate. This is because the electrical contact is produced between the ring and the inner surface of the cylindrical hole which is made in the substrate. A further advantage with this fixing device is that it may be assembled without requiring both sides of the substrate to be accessible.

However a disadvantage of the fixing device lies in the pre-assembly process. This process requires the socket to be inserted into the ring very slightly so as to form a unitary item ready for eventual location in the hole of the substrate. However, the extent of insertion is critical as over insertion will result in too much deformation of the ring and under insertion will result in the socket and the ring detaching. The extent of insertion depends on many factors, including the material hardness, the outer diameter of the socket, the inner diameter of the ring, surface finish and the amount of forced applied to those parts. Therefore, an effective pre-assembly process requires close control of those variables.

Upon completion of the pre-assembly process, the pre-assembled fixing devices must be carefully packaged to ensure the ring and socket of each fixing device do not detach and thus become mixed up with other rings and sockets in the package during delivery.

Therefore, an object of the present invention is to overcome the disadvantages associated with the prior art by providing a fixing device which is less time consuming and expensive to produce.

### Statement of Invention

According to one aspect of the invention, there is provided a device for fixing an electrical connection terminal to a support provided with an opening, the device comprising:
a generally tubular bush for location within the opening of the support and provided with opposed front and rear ends between which extends a bore;
a dowel configured for forced insertion into the bore so as to cause outward deformation of the bush, the dowel being provided with connection means engageable with a connector for fastening the terminal to the support and to facilitate the forced insertion; and
a weak region interconnecting the bush and the dowel.

An advantage with this fixing device is that the dowel and the bush may be manufactured as a single unit thus obviating the need for such an onerous pre-assembly process. In addition, the dowel and the bush form a single unit that are less likely to become inadvertently separated and therefore less care may be taken when packaging the fixing devices to avoid separation of those parts.

In a preferred embodiment, the weak region may be configured to break upon forced insertion of the dowel into the bush. For instance, a force may be applied to the dowel to facilitate insertion into the bore and the weak region may break upon initiation of that force, depending on the magnitude of the force and the strength of the weak region. Advantageously, the dowel may be rearward of the bush and urged forward for insertion into the bore. It may therefore be preferable for the weak region to interconnect the rear end of the bush and the front end of the dowel.

The shape and size of the weak region may be selected according to the capabilities of the manufacturing process and the desired strength of the weak region. The weak region must be sufficiently weak to break under the desired load and sufficiently strong to withstand the manufacturing process, delivery and subsequent handling prior to installation. For instance, the weak region may comprise one or more tabs spaced regularly or irregularly around the periphery of the fixing device. In a preferred arrangement, the weak region comprises an annular flange extending substantially around the periphery of the fixing device. The annular flange may taper rearwardly so as to extend between the rear end of the bush, which may have a larger cross-section, and the front end of the dowel, which may have a smaller cross-section.

The fixing device may be made from a range of electrically conductive materials, such as aluminium, copper, titanium, stainless steel or brass. It may also be advantageous to harden at least part of the device, such as the dowel, for instance.

Furthermore, it may be preferable to coat the fixing device with a material which resists corrosion, has a low electrical resistance and is sufficiently ductile to allow deformation. A coating of that nature may be particularly preferable for fixing devices made from some of the more corrosive materials, such as aluminium, copper and titanium. Even if the fixing device is sufficiently well coated during manufacture, uncoated portions of the dowels and the bush are likely to result from the broken weak region. The uncoated portion of the dowel is likely to move within the bore upon full insertion of the dowel into the bush and thus be concealed from the elements. The uncoated portion of the bush may be concealed by a rib, which is provided on the dowel and configured to engage the uncoated portion of the bush upon full insertion. The rib may also serve as an abutment which limits the amount by which the dowel may be inserted into the bush.

The connection means may comprise an opening into a threaded hole extending at least partway through the dowel. The threaded hole may be sized to receive a connector such as a screw for securing the terminal to the substrate. In an alternative arrangement, the connection means may comprise a threaded spigot extending forward of the front end and configured to engage a connector such as a nut. In yet a further alternative arrangement, the connection means may comprise a bayonet fitting, for example.

The degree of deformation of the bush upon forced insertion of the dowel may depend on the size and shape of the dowel and the bore. Preferably at least part of the dowel forms an interference fit with the bore so as to cause deformation of the bush. In particular, the cross section of the dowel is larger than the cross-section of the bore at least at some corresponding points along their lengths so as to cause deformation of the bush upon forced insertion of the dowel. The dowel may be cylindrical or it may narrow towards the front end and the bore may be cylindrical or it may narrow towards the front end of the bush. The cross-sections of the dowel and the bore may be selected to cause deformation of the bush behind the substrate such that a portion of the bush engages a rear face of the substrate. This restricts forward movement of the fixing device to prevent removal from the hole. Rearward movement of the fixing device is prevented by a flange extending radially from the front end of the bush for engagement with the front face of the substrate.

According to a further aspect of the invention, there is provided a method of installing a fixing device on a substrate provided with an opening, the method comprising the steps of:
(a) providing a fixing device comprising: a bush with a bore, a dowel and a weak region interconnecting the bush and the dowel;
(b) mounting the fixing device to the substrate such that the bush locates in the opening in said substrate;
(c) applying a force to the dowel in a direction towards the bush so as to cause the weak region to break; and
(d) continuing to apply the force to the dowel so as to cause forced insertion of the dowel into the bore and cause outward deformation of the bush.

Advantageously, the method described above may also include the steps of (a) furnishing the dowel with a rib and (b) continuing to apply the force to the dowel to cause the rib to abut the bush. The abutment of the rib and the bush may conceal a portion of the bush exposed following the breaking of the weak region and thus protect that portion from the elements. This is particularly advantageous when a protective coating was applied to the device during manufacture and the portion of the bush exposed following the breaking of the weak region is uncoated.

### Specific Description

By way of example only, one specific embodiment of the present invention will now be described in detail, with reference being made to the accompanying drawings, in which:
**Figure 1** **is** a rear perspective view of the fixing device according to the invention;
**Figure 2** is a cross-sectional view from the fixing device shown in Figure 1;
**Figure 3** is an exploded cross-sectional view of the weak region of the fixing device shown in Figure 2.
**Figures 4a to 4c** show three stages of the process of installing the fixing device of Figures 1 to 3 into a substrate;
**Figure 5** shows the fixing device fitted to the substrate; and
**Figure 6** shows the electrical terminal secured to the fixing device by a screw.

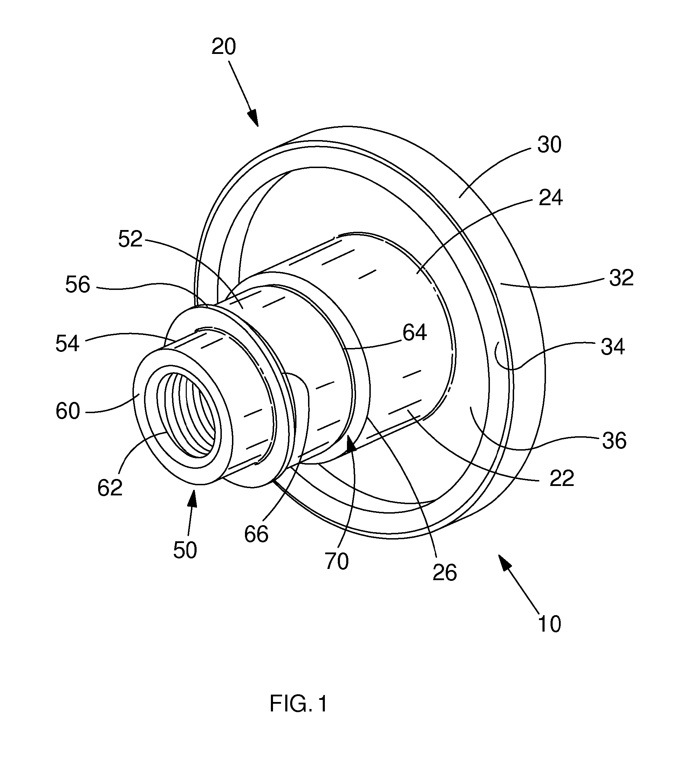

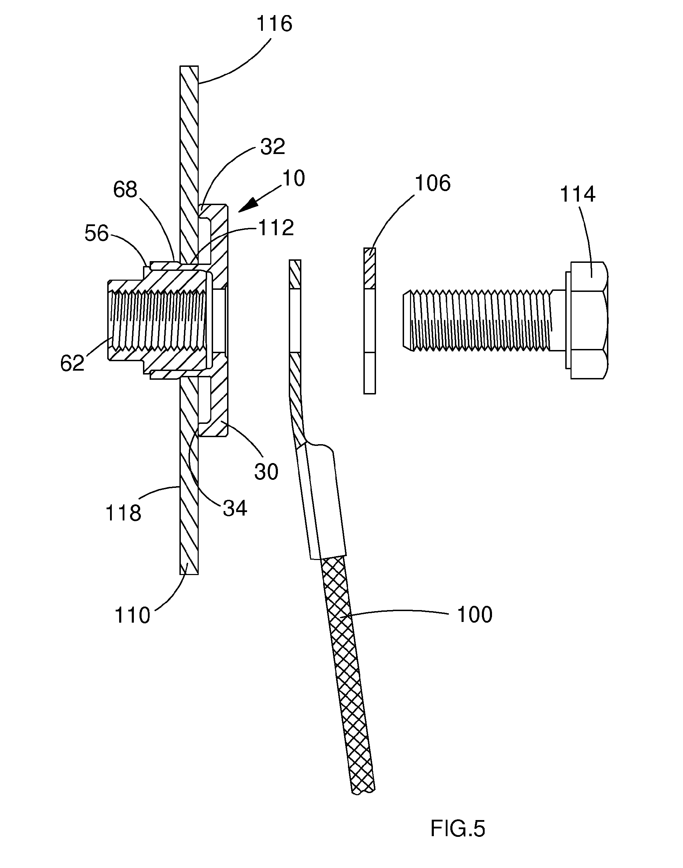

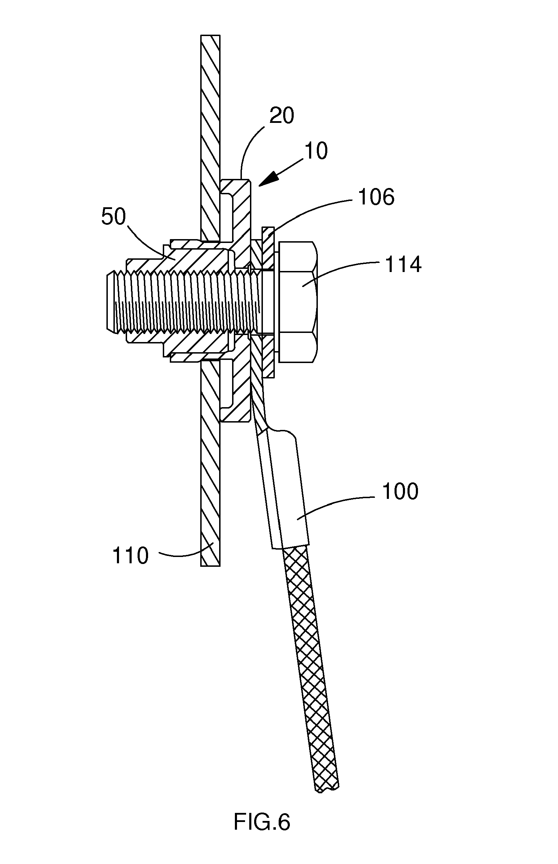

Referring initially to Figures 1 to 3, there is provided a fixing device, generally indicated 10, suitable for securing an electrical terminal 100 (Figures 5 and 6) to a substrate 110 (Figures 5 and 6) provided on an aircraft, a railway line and so on. The fixing device comprises a bush 20, a dowel 50 and a weak region 70 interconnecting the bush 20 and the dowel 50. The fixing device may be cast, machined or cold formed as a unitary item from aluminum, copper, stainless steel or titanium and finally machine finished to a high standard before possibly being provided with a coating.

The bush 20 has a cylindrical body 22 defining front and rear ends 24,26 and a bore 28 extending axially therethrough. The cylindrical body 22 is intended for location in an opening 112 in the substrate 110 and is sized to engage closely the portion of the substrate inside the opening 112, such that electrical energy may be conducted between the bush 20 and the substrate 110.

The bush 20 also includes a plate 30 provided on the front end 24 of the cylindrical body 22 and is sized to extend radially someway therebeyond. The plate 30 has a generally planar rear face 36 and a generally planar front face 38 to which the terminal 100 can be secured. An aperture 40 is formed in the centre of the plate 30 for allowing the passage of a screw 114, bolt or other mechanical fastener to be discussed below in connection with Figures 5 and 6. The plate 30 may include a lip 32 extending rearwardly from its periphery to define a rearward facing annular contact face 34.

The dowel 50 includes a generally cylindrical front portion 52, a generally cylindrical rear portion 54 and a circumferential abutment 56 therebetween. The dowel 50 has a generally circular front face 58 defined by the front portion 52, a generally circular rear face 60 defined by the rear portion 54 and a hole 62 extending between those front and rear faces 58,60. The hole 62 is slightly diametrically smaller than the aperture 40 and is threaded to engage the screw 114. The front portion 52 has a length substantially equal to the length of the bore 28 and a diameter generally greater than the diameter of the bore 28, except for a narrow portion 64 adjacent the front face 58 which tapers inwardly. The abutment 56 is diametrically larger than the front portion 52 and defines a forward facing inclined face 66.

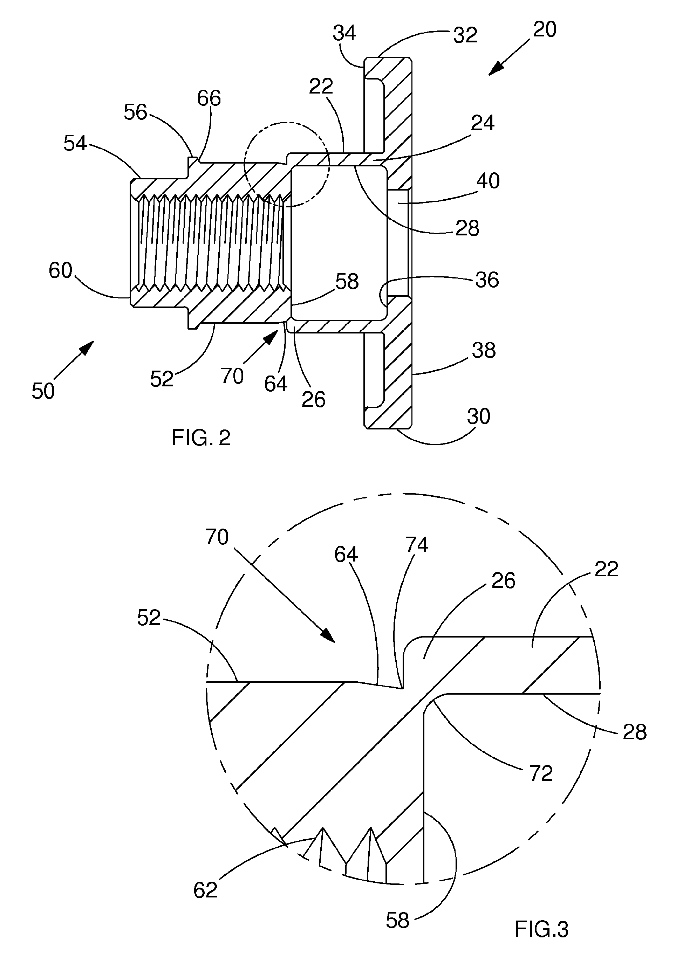

As best shown in Figure 3, the weak region 70 is a thin band of material interconnecting the bush 20 and the dowel 50. The weak region 70 is defined by an internal radius 72 between the front face 58 of the dowel 50 and the bore 28 of the bush 20. In addition, the weak region 70 is defined by the vertex 74 between the narrow band 64 and the end face of the cylindrical body 22 which are arranged at an acute angle.

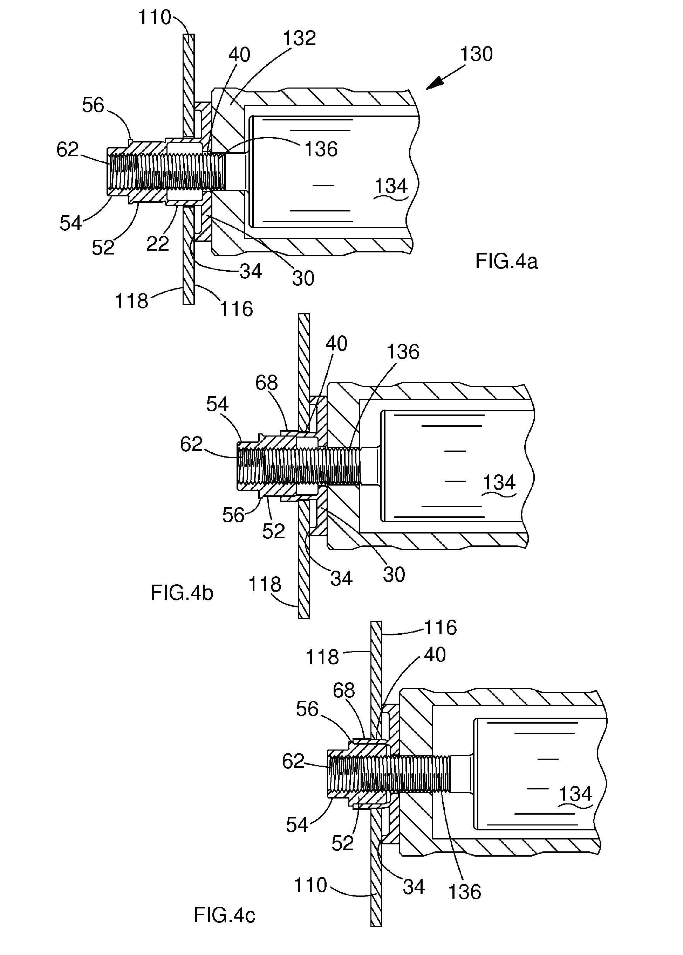

Installation of the fixing device 10 is illustrated in Figures 4a to 4c. Figure 4a shows the fixing device located in the opening 112 formed in the substrate 110 and achieves two points of contact between the fixing device and the substrate. The first point of contact and possibly the most reliable is between the cylindrical body 22 of the bush 20 and the portion of the substrate 110 inside the opening 112. The second point of contact and possibly the least reliable (at least with a coated substrate) is between the annular contact face 34 of the bush 20 and the front face 116 of the substrate 110.

A setting tool 130 is employed to install the fixing device on the substrate 110. The setting tool 130 has a cylinder 132 which bears against the front face 38 of the plate 30 to urge the bush 20 towards the substrate 110. The setting tool 130 also has a rotatable piston 134 provided with a threaded shank 136 adapted to extend through the aperture 40 and threadingly to engage the hole 62.

Turning now to Figure 4b, the piston has been partially retracted within the cylinder so as to apply a tensile force to the dowel 50 in a forward direction while restricting movement of the bush 20. This tensile force causes the weak region to break as the front portion 52 of the dowel 50 begins to move into the bore 28. Movement of the dowel 50 into the bore 28 is assisted initially by the narrow portion 64 adjacent the front face 58 which tapers inwardly. The narrow portion may indeed act as a cam surface to cause outward deformation of the cylindrical body 22. The outwardly deformed portion 68 of the cylindrical body 22 bears against the rear face 118 of the substrate 110 and thus restricts forward movement of the fixing device 10 relative to the substrate 110.

Figure 4c shows the final step of the installation process in which the piston 134 is further retracted in the cylinder 130 so as to cause the front portion 52 of the dowel 50 to locate fully within the bore 28 of the cylindrical body 22. In this position, further deformation of the cylindrical body 22 has occurred so as to achieve greater contact with the rear face 118 of the substrate 110. Upon breaking the weak region 70, uncoated portions of the dowel 50 and the bush 20 appear in the area of the break. The uncoated portion of the dowel 50 locates in the bore 28 and is thus protected adequately from the elements to minimize the chance of corrosion. The uncoated portion of the cylindrical body is shielded by the inclined face 66 of the abutment 56, which abuts the cylindrical body 22 once the dowel 50 fully locates inside the bore 28. In fact, the inter-engagement of the abutment 56 and the cylindrical body 22 may serve as an indication that full insertion of the dowel 50 within the bore 28 has been achieved.

Figure 5 shows the fixing device 10 secured to the substrate 110, which is trapped tightly between the lip 32 of the plate 30 and the deformed portion 68 of the cylindrical body 22. In preparation for installation, the terminal 100, the washer 106 and the screw 114 are presented to the fixing device 10. The terminal 100 and the washer 106 each have respective openings 104, 108 corresponding to opening 112 for allowing the passage of the screw 114.

Figure 6 shows the terminal 100 secured to the substrate 110 via the screw 114, washer 106 and the fixing device 10. The inter-engagement of those parts facilitates effective electrical conductivity between the terminal and the substrate.

## Claims

1. A device for fixing an electrical connection terminal to a support provided with an opening, the device comprising:
a generally tubular bush for location within the opening of the support and provided with opposed front and rear ends between which extends a bore;
a dowel configured for forced insertion into the bore so as to cause outward deformation of the bush, the dowel being provided with connection means engageable with a connector for fastening the terminal to the support and to facilitate the forced insertion;
**characterised in that** there is further provided a weak region interconnecting the bush and the dowel.

2. A device as claimed in claim 1, wherein the weak region is configured to break upon forced insertion of the dowel into the bush.

3. A device as claimed in claim 1 or claim 2, wherein the weak region interconnects the rear face of the bush and the front end of the dowel.

4. A device as claimed in any preceding claim, wherein the weak region extends at least substantially around the periphery of the device.

5. A device as claimed in any preceding claim and made from aluminium, copper, titanium, stainless steel or brass

6. A device as claimed in any preceding claim, and further including a coating to resist corrosion.

7. A device as claimed in any preceding claim, wherein the dowel is furnished with a rib configured to conceal a portion of the weak region remaining on the bush upon completion of the forced insertion of the dowel.

8. A device as claimed in any preceding claim, wherein the bore is substantially cylindrical

9. A device as claimed in any of claims 1 to 7, wherein the bore narrows towards the front end of the bush.

10. A device as claimed in any preceding claim, wherein at least a portion of the dowel configured for forced insertion into the bore is substantially cylindrical.

11. A device as claimed in any of claims 1 to 8, wherein at least a portion of the dowel configured for forced insertion into the bore narrows towards its front end.

12. A device as claimed in any preceding claim, wherein the cross section of the dowel is larger than the cross-section of the bore at corresponding points along their lengths so as to cause deformation of the bush upon forced insertion of the dowel.

13. A device as claimed in any preceding claim, wherein the bush and the dowel are unitary.

14. A method of installing a fixing device on a substrate provided with an opening, the method comprising the steps of:
(a) providing a fixing device comprising: a bush with a bore, a dowel and a weak region interconnecting the bush and the dowel;
(b) mounting the fixing device to the substrate such that the bush locates in the opening in said substrate;
(c) applying a force to the dowel in a direction towards the bush so as to cause the weak region to break; and
(d) continuing to apply the force to the dowel so as to cause forced insertion of the dowel into the bore and cause outward deformation of the bush.

15. A method as claimed in claim 14, and further comprising the steps of:
(a) furnishing the dowel with a rib; and
(b) continuing to apply the force to the dowel to cause the rib to abut the bush and to conceal a portion of the bush exposed following the breaking of the weak region.
